# FASCICULE DE BREVET EUROPEEN

(11) **EP 1 928 648 B1**
(45) Date de publication et mention de la délivrance du brevet: **11.12.2013**
(21) Numéro de dépôt: 06793872.0
(22) Date de dépôt: 27.09.2006
(51) Int. Cl.: B29C 73/04, B29C 73/32, B32B 43/00, B32B 3/12, B64F 5/00, H01Q 1/42

(54) **PROCEDE DE REPARATION D'UNE PEAU EXTERNE DE STRUCTURE COMPOSITE**
VERFAHREN ZUR REPARATUR DER STRUKTURELLEN AUSSENHAUT EINES VERBUNDSTOFFES
METHOD FOR REPAIRING A COMPOSITE STRUCTURAL OUTER SKIN

(30) Priorité: 29.09.2005 FR 0552951
(43) Date de publication de la demande: 11.06.2008
(73) Titulaire: AIRBUS OPERATIONS, 31060 Toulouse (FR)
(72) Inventeur: BERNUS, Christophe, F-31000 Toulouse (FR); MARTY, Jean-Claude, F-31190 Grepiac (FR)
(74) Mandataire: Ilgart, Jean-Christophe
(86) Numéro de dépôt international: PCT/EP2006/066814
(87) Numéro de publication internationale: WO 2007/036546

(56) Documents cités:
- FR-A- 2 773 645
- FR-A- 2 777 496
- US-A- 4 668 317
- US-A- 5 928 448

## Description

L'invention concerne un procédé de réparation d'une peau externe d'une structure composite, comprenant une âme interne, alvéolaire, entre une paire de peaux externes dont l'une fait l'objet de la réparation.

Une telle structure composite se rencontre dans une quantité d'appareils, notamment des engins de transport, ferroviaires, maritimes, ou aéronautiques ; par exemple sur les coques de bateaux ou sur les carénages extérieurs, les bords d'attaque de voilure, les ailerons et les radômes des avions.

La peau de la structure qui donne sur l'extérieur est souvent endommagée à un degré qui impose de la remplacer. Une portion neuve de peau est posée par drapage sur la structure à l'endroit à réparer et mise à durcir. Pour garantir une surface réparée bien lisse, et sans dénivellation avec la peau d'origine au bord de la portion neuve, une contre-forme est posée et pressée sur la portion neuve de peau avant le durcissement, pour l'amener en prolongement avec la peau d'origine.

On peut craindre un défaut de collage entre la portion neuve de peau et l'âme sous-jacente malgré cette précaution. L'objet de l'invention est d'éliminer ce risque et d'assurer la qualité du collage de la peau externe sur l'âme.

Le défaut de collage peut provenir du manque de mise en pression de l'âme sur les peaux lors de la cuisson accomplissant le durcissement, lui-même causé par la pression de l'air qui est emprisonné dans les alvéoles de l'âme et que la pression de la contre-forme empêche de sortir par-dessous les bords de la portion neuve de peau. Dans les procédés usuels, la portion à réparer de la structure est enveloppée dans un sac formant une chambre dans laquelle le vide est réalisé pour pomper les excédents de résine et drainer cet air, mais le drainage n'est pas toujours obtenu de façon satisfaisante.

De l'art antérieur proche est constitué par le FR 2 573 645 A qui divulgue les caractéristiques techniques du préambule de la revendication 1. La structure d'un radôme à réparer comprend une âme interne et deux peaux externes. La réparation envisagée dans ce brevet antérieur est une réparation traversante où on remplace des portions et de l'âme et des deux peaux. La réparation s'effectue en deux étapes principales, dont la première comprend la polymérisation de la portion de remplacement d'une des peaux après qu'on a installé aussi la portion de remplacement de l'âme interne et une contre-forme. La seconde étape principale de réparation consiste en la polymérisation de la deuxième peau après qu'on a installé la portion de remplacement. Ce document ne décrit pas d'étape de perçage conforme à l'invention.

On peut encore citer le US 4 668 317 A qui divulgue les caractéristiques techniques du préambule de la revendication 2. Ce brevet concerne des radômes de radars comprenant deux couches d'âme et une peau médiane entre les deux peaux externes. Le procédé de réparation consiste à entailler chaque couche de la peau externe à réparer d'ouvertures de plus en plus grandes vers l'extérieur, et plus grandes que l'ouverture de l'âme sous-jacente, de manière à produire une surépaisseur faible puisque répartie sur un anneau de largeur plus grande. Il n'est pas question de drainage de l'air des deux couches d'âme, ni de réparation traversante concernant toutes les épaisseurs et notamment les deux âmes.

Sous une forme générale, l'invention concerne un procédé de réparation d'une structure en matière composite comprenant une âme interne alvéolaire entre deux peaux externes opposées, consistant à remplacer une portion de l'une desdites peaux externes par une portion neuve, à poser une contre-forme rigide sur la portion neuve et autour d'elle, à appuyer la contre-forme sur la structure composite et à durcir la portion neuve, caractérisé en ce qu'il comprend, avant le durcissement, une étape de perçage de l'autre desdites peaux externes jusqu'à l'âme interne et de drainage de l'air contenu dans l'âme interne. Sous une forme un peu plus compliquée mais encore générale, l'invention concerne un procédé de réparation d'une structure en matière composite comprenant une âme interne alvéolaire entre deux peaux externes opposées, consistant à remplacer une portion de l'une desdites peaux externes par une portion neuve, à poser une contre-forme rigide sur la portion neuve et autour d'elle, à appuyer la contre-forme sur la structure composite et à durcir la portion neuve, caractérisé en ce qu'il comprend, avant le durcissement, une étape de perçage de l'autre desdites peaux externes jusqu'à l'âme interne et de drainage de l'air contenu dans l'âme interne, suivi, si ceci est nécessaire, d'un rebouchage à la résine des trous pour garantir l'étanchéité de la structure.

Ces aspects de l'invention, ainsi que d'autres, seront maintenant décrits en liaison aux figures suivantes :
- la figure 1 est une vue générale d'un procédé de réparation classique,
- et les figures 2 et 3 illustrent deux variantes principales de réalisation de l'invention.

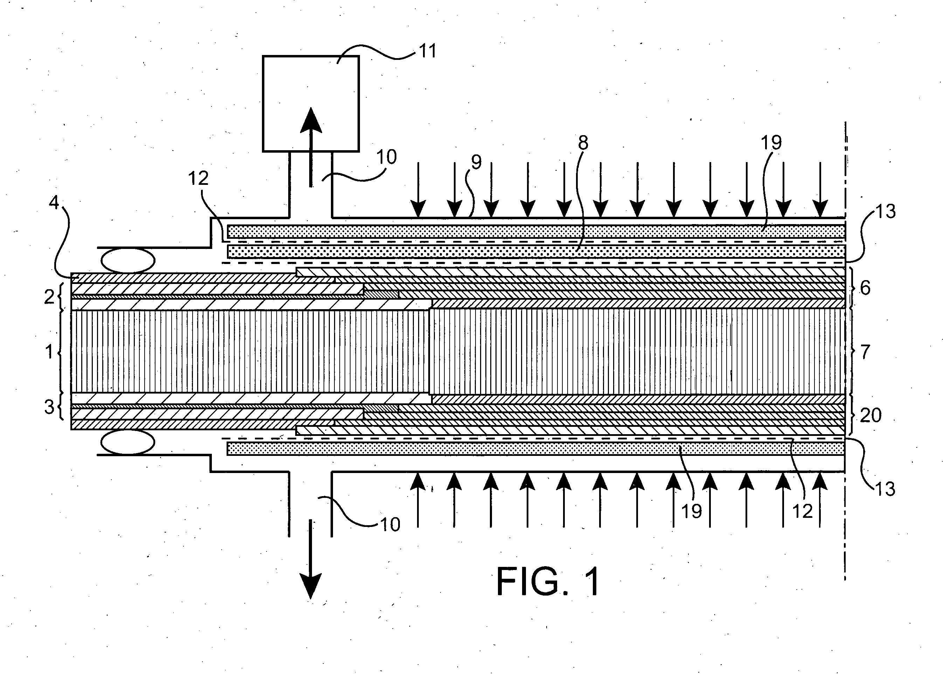

La structure de la figure 1 comprend une âme 1 interne et deux peaux extérieures 2 et 3 opposées entre lesquelles l'âme 1 est intercalée avec collage. Les peaux externes 2 et 3 sont généralement composées de couches plissées de polymère qu'on a successivement drapées puis fait durcir. L'âme 1 interne est alvéolaire, souvent constituée d'une structure en nid d'abeille dont les cellules 5 s'étendent d'une des peaux externes 2 à l'autre 3. La réparation concerne la peau externe 2, dont la portion endommagée est enlevée et remplacée par une portion neuve de peau 6 dont la structure est identique à celle de la peau externe 2. En variante, une portion sous-jacente de l'âme 1 pourrait être retirée elle aussi et remplacée par une portion neuve d'âme 7. En variante encore, une portion sous-jacente de l'autre peau externe 3 pourrait être retirée elle aussi et remplacée par une autre portion neuve de peau 20. Ces variantes, qui dépendent surtout de la profondeur des. dommages, n'ont pas d'influence sur l'invention, qui peut s'appliquer de la même façon.

L'outillage traditionnel comprend une contre-forme 8, usuellement en forme de plaque qu'on pose sur la portion neuve de peau 6. La face inférieure de la contre-forme 8, appuyée sur la portion neuve de peau 6 et, autour d'elle, sur une bordure de la peau externe 2. d'origine, a une forme et une qualité de surface correspondant à celles qu'on veut obtenir pour la peau externe 2 après la réparation. La contre-forme 8 est pressée sur la peau externe 2 et comprime la portion neuve de peau 6. Cela est réalisé en enfermant la portion à réparer de la structure dans un sac à vide 9 dont des évents 10 sur chaque face de la structure sont reliés à une pompe à vide 11 ou un appareillage similaire. Des tapis chauffants 12 sont glissés dans le sac à vide 9 pour cuire les couches de polymère imprégnées de résine de la portion neuve de peau 6. La face inférieure de la contre-forme 8 est souvent revêtue de polytétrafluoroéthylène (PTFE) pour assurer un démoulage facile après le durcissement ; une feuille d'arrachage 13 peut aussi être glissée sous elle, en contact avec la portion neuve de peau 6. Enfin, des tissus d'environnement 19 sont placés entre la face interne du sac à vide 9 et les tapis chauffants 12. Le drainage s'effectue à travers eux.

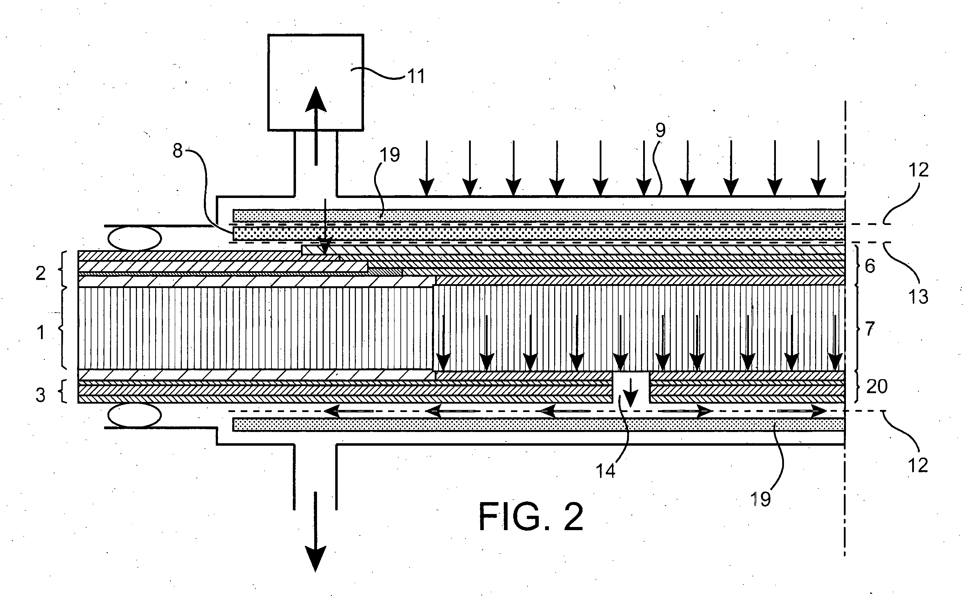

La pompe à vide 11 aspire l'air inclus dans le sac à vide 9, mais elle peut être impuissante à le faire convenablement pour l'air inclus dans les alvéoles 5 de l'âme interne 1 sous la portion neuve de peau 6, puisque la pression de la contre-forme 8 l'empêche de s'écouler par-dessous le bord de la portion neuve de peau 6 en produisant une adhérence suffisant à l'étanchéité avec la portion d'origine de la peau externe 2. Des défauts de collage entre l'âme interne 1 et la portion neuve de peau 6 pourraient apparaître après le durcissement. C'est pourquoi, selon l'invention et comme on le représente à la figure 2, on opère un trou d'évent 14 à travers l'autre peau externe 3, au-dessous de la portion neuve de peau 6, ce qui produit un drainage efficace des alvéoles au-dessous et autour de l'évent 14, directement ou à travers des interstices entre l'âme interne 1 et la peau externe 3. Le collage de la portion neuve de peau 6 est garânti, puisqu'elle adhère bien à l'âme interne 1 et la surface libre de la peau externe 2 a un état aussi bon et généralement meilleur qu'avec les procédés antérieurs, ce qui améliore l'aspect de la structure et préserve sa transparence radioélectrique en évitant un éventuel bouchonnage (masticage) de la peau extérieure pour lui redonner un aspect convenable lors des phases ultérieures de mise en peinture, ce qui représente un avantage capital pour les radômes d'avions. De plus, la réparation est rapide.

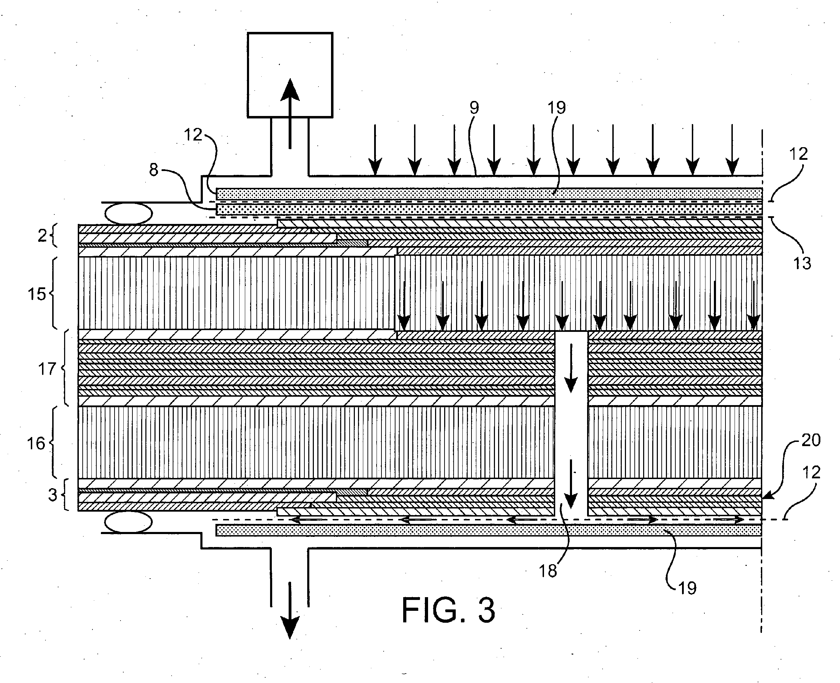

Une'variante de réalisation sera maintenant décrite à la figure 3. Cette structure-ci peut concerner, par exemple, des radômes de nez d'avion réalisés en sandwich double pour des raisons d'optimisation de transparence aux diverses fréquences. L'âme interne 1 est remplacée par une couche interne composée de deux âmes 15 et 16, séparées par une peau médiane 17 de constitution analogue à celle des peaux externes.2 et 3. L'évent 14 est alors remplacé par un évent 18 qui traverse non seulement la peau externe 3 dirigée vers l'intérieur de la structure, mais la couche interne de l'âme 16 en regard d'elle et la peau médiane 17, jusqu'à déboucher sous l'autre couche interne de l'âme 15 qui est en regard de la portion neuve de peau. L'invention n'est par ailleurs pas modifiée, l'évent 18 opérant comme l'évent 14 l'évent 18 étant lui aussi rebouché. Ici aussi des portions neuves d'autres peaux ou des couches d'âme pourraient remplacer des portions antérieures endommagées, comme dans la première façon de procéder.

## Revendications

1. Procédé de réparation d'une structure en matière composite comprenant une âme interne (1) alvéolaire entre deux peaux externes opposées (2, 3), consistant à remplacer une portion de l'une desdites peaux externes par une portion neuve (6), à poser une contre-forme (8) rigide sur la portion neuve et autour d'elle, à appuyer la contre-forme sur la structure en matière composite et à durcir la portion neuve, **caractérisé en ce qu'**il comprend, avant le durcissement, une étape de perçage (14) de l'autre desdites peaux externes (3) jusqu'à l'âme interne et de drainage de l'air contenu dans l'âme interne.

2. Procédé de réparation d'une structure en matière composite comprenant une âme interne alvéolaire entre deux peaux externes opposées (2, 3), et une peau médiane (17) séparant l'âme interne en deux couches (15, 16), consistant à remplacer une portion de l'une desdites peaux externes par une portion neuve (6), à poser une contre-forme rigide (8) sur la portion neuve et autour d'elle, à appuyer la contre-forme sur la structure composite et à durcir la portion neuve, **caractérisé en ce qu'**il comprend, avant le durcissement, une étape de perçage (18) de l'autre desdites peaux d'externes (3), d'une des couches (16) de l'âme interne et de la peau médiane (17) jusqu'à l'autre couche de l'âme interne et le drainage de l'air contenu dans l'âme interne.

3. Procédé de réparation d'une structure en matière composite selon l'une quelconque des revendications 1 ou 2, **caractérisé en ce que** l'âme interne est une structure en nid d'abeille aux alvéoles s'étendant entre deux des peaux (2, 3 ; 2, 17 ; 17, 3).

4. Procédé de réparation d'une structure en matière composite selon l'une quelconque des revendication 1 à 3, **caractérisé en ce que** la contre-forme comprend une surface posée sur la portion neuve qui est en polytétrafluoréthylène.

5. Procédé de réparation d'une structure en matière composite selon l'une quelconque des revendications 1 à 4, **caractérisé en ce qu'**une feuille d'arrachage (13) est posée entre la contre-forme (8) et la portion neuve (6).

6. Procédé de réparation d'une structure en matière composite selon l'une quelconque des revendications 1 à 5, **caractérisé en ce que** le perçage (14, 18) est rebouché à la résine.

7. Procédé de réparation d'une structure en matière composite selon l'une quelconque des revendications 1 à 6, **caractérisé en ce qu'**il consiste à remplacer aussi une portion neuve (20) avant de poser la contre-forme (8).

8. Procédé de réparation d'une structure en matière composite selon l'une quelconque des revendications 1 à 7, **caractérisé en ce qu'**il consiste à remplacer aussi une portion de l'âme interne par une portion neuve (7) avant de poser la contre-forme (8).

## Patentansprüche

1. Verfahren zur Reparatur einer Struktur aus einem Verbundmaterial, umfassend einen zellförmigen inneren Kern (1) zwischen zwei entgegengesetzten äußeren Häuten (2, 3), durch Ersetzen von einem Teil von einer der äußeren Häute durch einen neuen Teil (6), durch Auflegen einer starren Gegenform (8) auf den neuen Teil und rings um diesen, durch Drücken der Gegenform gegen die Struktur aus Verbundmaterial und durch Härten des neuen Teils,
**dadurch gekennzeichnet, dass** das Verfahren vor dem Härten einen Schritt des Durchbohrens (14) der anderen der äußeren Häute (3) bis zum inneren Kern und des Herausziehens der in dem inneren Kern enthaltenen Luft umfasst.

2. Verfahren zur Reparatur einer Struktur aus einem Verbundmaterial, umfassend einen zellförmigen inneren Kern zwischen zwei entgegengesetzten äußeren Häuten (2, 3) und eine Mittelhaut (17), die den inneren Kern in zwei Schichten (15, 16) trennt, durch Ersetzen von einem Teil von einer der äußeren Häute durch einen neuen Teil (6), durch Auflegen einer starren Gegenform (8) auf den neuen Teil und rings um diesen, durch Drücken der Gegenform gegen die Verbundstruktur und durch Härten des neuen Teils,
**dadurch gekennzeichnet, dass** das Verfahren vor dem Härten einen Schritt des Durchbohrens (18) von der anderen der äußeren Häute (3), einer der Schichten (16) des inneren Kerns und der Mittelhaut (17) bis zur anderen Schicht des inneren Kerns und das Herausziehen der in dem inneren Kern enthaltenen Luft umfasst.

3. Verfahren zur Reparatur einer Struktur aus einem Verbundmaterial nach einem der Ansprüche 1 oder 2, **dadurch gekennzeichnet, dass** der innere Kern eine Wabenstruktur mit Zellen, die sich zwischen zweien der Häute (2, 3; 2, 17; 17, 3) erstrecken, ist.

4. Verfahren zur Reparatur einer Struktur aus einem Verbundmaterial nach einem der Ansprüche 1 bis 3, **dadurch gekennzeichnet, dass** die Gegenform eine auf den neuen Teil aufgelegte Oberfläche aufweist, die aus Polytetrafluorethylen besteht.

5. Verfahren zur Reparatur einer Struktur aus einem Verbundmaterial nach einem der Ansprüche 1 bis 4, **dadurch gekennzeichnet, dass** zwischen die Gegenform (8) und den neuen Teil (6) eine Trennfolie (13) eingefügt wird.

6. Verfahren zur Reparatur einer Struktur aus einem Verbundmaterial nach einem der Ansprüche 1 bis 5, **dadurch gekennzeichnet, dass** die Bohrung (14, 18) mit Harz verkittet wird.

7. Verfahren zur Reparatur einer Struktur aus einem Verbundmaterial nach einem der Ansprüche 1 bis 6, **dadurch gekennzeichnet, dass** es aus dem Ersetzen von auch einem neuen Teil (20) vor dem Auflegen der Gegenform (8) besteht.

8. Verfahren zur Reparatur einer Struktur aus einem Verbundmaterial nach einem der Ansprüche 1 bis 7, **dadurch gekennzeichnet, dass** es aus dem Ersetzen von auch einem Teil des inneren Kerns durch einen neuen Teil (7) vor dem Auflegen der Gegenform (8) besteht.

## Claims

1. A method for repairing a composite material structure comprising a cellular internal core (1) between two opposite external skins (2, 3), consisting of replacing a portion of one of said external skins with a new portion (6), laying a rigid counter-form (8) on the new portion and around it, pressing the counter-form onto the composite material structure and hardening the new portion, **characterized in that** it comprises before hardening, a step (14) for piercing the other of said external skins (3) right up to the internal core and for draining the air contained in the internal core.

2. A method for repairing a composite material structure comprising a cellular internal core between two opposite external skins (2, 3), and a middle skin (17) separating the internal core into two layers (15, 16), consisting of replacing a portion of one of said external skins with a new portion (6), laying a rigid counter-form (8) on the new portion and around it, pressing the counter-form onto the composite structure and hardening the new portion, **characterized in that** it comprises before hardening, a step (18) for piercing the other of said external skins (3) of one of the layers (16) of the internal core and of the middle skin (17) right up to the other layer of the internal core and for draining the air contained in the internal core.

3. The method for repairing a composite material structure according to any of claims 1 or 2, **characterized in that** the internal core is a honeycomb structure with cells extending between two of the skins (2, 3 ; 2, 17 ; 17, 3).

4. The method for repairing a composite material structure according to any of claims 1 to 3, **characterized in that** the counter-form comprises a surface laid on the new portion which is in polytetrafluoroethylene.

5. The method for repairing a composite material structure according to any of claims 1 to 4, **characterized in that** a pealable sheet (13) is laid between the counter-form (8) and the new portion (6).

6. The method for repairing a composite material structure according to any of claims 1 to 5, **characterized in that** the piercing (14, 18) is again filled up with resin.

7. The method for repairing a composite material structure according to any of claims 1 to 6, **characterized in that** it consists of also replacing a new portion (20) before laying the counter-form (8).

8. The method for repairing a composite material structure according to any of claims 1 to 7, **characterized in that** it consists of also replacing a portion of the internal core with a new portion (7) before laying the counter-form (8).
